# DEMANDE DE BREVET EUROPEEN

(11) **EP 2 053 576 A1**
(43) Date de publication de la demande: **29.04.2009**
(21) Numéro de dépôt: 08167475.6
(22) Date de dépôt: 24.10.2008
(51) Int. Cl.: G08C 23/04, H04L 12/28

(54) **Dispositif de commande d'appareils de climatisation**

(30) Priorité: 25.10.2007 FR 0707520
(71) Demandeur: Delta Dore, 35270 Combourg (FR)
(72) Inventeur: Raffray, Patrick, 35120, HIREL (FR); Villalard, Erwan, 35190, TINTENIAC (FR)
(74) Mandataire: Maillet, Alain

(57) **Abrégé**

Il est décrit un dispositif de commande d'appareils de climatisation intégré à un système domotique. Ce dispositif dispose d'un jeu universel de commandes d'appareils de climatisation. Il est donc pilotable par le système domotique à l'aide de ce jeu universel de commandes. D'autre part, ce dispositif dispose de moyens permettant de recevoir et d'enregistrer les séquences infrarouges émises par une télécommande d'appareils de climatisation et de les associer avec les commandes du jeu de commandes universel. Il dispose également des moyens d'émettre la séquence infrarouge associée à une commande du jeu universel de commandes lorsque cette commande est sollicitée par le système domotique. Le dispositif de commande est donc à même d'apprendre le jeu de commandes d'un appareil de climatisation particulier.

## Description

La présente invention concerne un dispositif de commande d'appareils de climatisation. Il s'agit d'un composant s'intégrant dans un système de contrôle domotique et permettant de commander divers appareils de climatisation.

Les appareils de climatisation domestiques sont généralement pilotables à l'aide d'une télécommande à infrarouge. Ces télécommandes permettent de fixer des consignes de température, de commander le fonctionnement d'un ventilateur ou encore d'effectuer une programmation horaire de fonctionnement. Pour ce faire, la télécommande comprend un émetteur de signaux infrarouges permettant l'émission de séquences infrarouges à destination du climatiseur. Le climatiseur lui-même comprend un récepteur infrarouge lui permettant de recevoir les séquences infrarouges. Ces séquences correspondent à un jeu de commandes permettant le pilotage et la programmation du climatiseur. D'une manière générale, chaque constructeur de climatiseur a développé son propre jeu de commandes et donc les séquences infrarouges correspondant à une commande particulière changent d'un constructeur à l'autre, voire d'un climatiseur à l'autre.

Ces dernières années se sont développés des systèmes domotiques visant à permettre le contrôle de divers appareils dans la maison. Ces systèmes permettent de contrôler la température ambiante dans la maison par un pilotage du système de chauffage. Ce contrôle peut être programmé pour varier en fonction de l'heure de la journée et souvent du jour de la semaine. Ces systèmes domotiques peuvent également contrôler le fonctionnement des ouvertures de la maison comme les fenêtres ou encore l'éclairage. Ils peuvent également intégrer des fonctions de prévention des actes d'intrusion par la commande de systèmes d'alarme et de détection. Ces systèmes peuvent contrôler de plus en plus d'appareils et visent à apporter à l'utilisateur un contrôle de plus en plus performant et programmable des divers composants de son habitation.

En ce qui concerne le contrôle du confort de l'habitation, ces systèmes domotiques agissent aujourd'hui principalement sur les moyens de chauffage de l'habitation. L'hétérogénéité des jeux de commandes des appareils de climatisation est un frein à leur intégration dans un système domotique. Cette intégration serait pourtant avantageuse en permettant de contrôler la température en pouvant piloter une baisse aussi bien qu'une hausse par le pilotage des moyens de climatisation et des moyens de chauffage. Ce contrôle des moyens de climatisation permettrait également une économie d'énergie grâce à une planification des besoins et grâce à la prise en compte d'événements ayant lieu au sein de l'habitation. Il serait par exemple possible de couper l'appareil de climatisation lors de l'ouverture des fenêtres ou encore d'anticiper sur le cycle naturel d'évolution de la température dans la journée. Il serait avantageux de pouvoir inclure au système domotique le contrôle d'un appareil de climatisation, et ceci, quel que soit son constructeur et donc le jeu de commandes permettant son pilotage.

L'invention vise à résoudre les problèmes précédents en proposant un dispositif de commande d'appareils de climatisation intégré à un système domotique. Ce dispositif dispose d'un jeu universel de commandes d'appareils de climatisation. Il est donc pilotable par le système domotique à l'aide de ce jeu universel de commandes. D'autre part, ce dispositif dispose de moyens permettant de recevoir et d'enregistrer les séquences infrarouges émises par une télécommande d'appareils de climatisation et de les associer avec les commandes du jeu de commandes universel. Il dispose également des moyens d'émettre la séquence infrarouge associée à une commande du jeu universel de commandes lorsque cette commande est sollicitée par le système domotique. Le dispositif de commande est donc à même d'apprendre le jeu de commandes d'un appareil de climatisation particulier.

Un tel dispositif de commande intégré à un système domotique permet donc à celui-ci de piloter tout type d'appareil de climatisation après une étape d'apprentissage des séquences infrarouges du jeu de commandes particulier de cet appareil de climatisation. L'utilisateur peut également piloter son appareil de climatisation en utilisant l'interface de pilotage de son système domotique.

L'invention concerne un dispositif de commande d'appareils de climatisation comportant des moyens d'émettre des commandes infrarouges à destination d'un appareil de climatisation ; des moyens de communication avec un système de contrôle domotique ; des moyens d'interprétation d'un jeu universel de commandes de climatiseurs ; ledit dispositif de commande étant utilisé pour piloter un appareil de climatisation pilotable par infrarouge et disposant de son propre jeu de commandes, des moyens d'enregistrer, pour au moins une commande du jeu universel, une séquence infrarouge correspondant à cette commande dans le jeu de commandes propre à l'appareil de climatisation piloté et des moyens d'émettre la séquence infrarouge enregistrée à destination de l'appareil de climatisation donné quand il reçoit la commande du jeu universel de commandes correspondante envoyée par le système de contrôle domotique.

Selon un mode de réalisation particulier de l'invention, les séquences infrarouges correspondant aux commandes du jeu universel sont stockées dans une mémoire du dispositif.

Selon un mode de réalisation particulier de l'invention, les séquences infrarouges correspondant aux commandes du jeu universel sont stockées dans un autre appareil du système domotique.

Selon un mode de réalisation particulier de l'invention, le dispositif comporte en outre des moyens d'envoyer une requête au système domotique pour recevoir la séquence infrarouge correspondant à une commande universelle.

Selon un mode de réalisation particulier de l'invention, le dispositif comprend des moyens de mémoriser des séquences infrarouges correspondant à un sous-ensemble du jeu de commandes universel.

Selon un mode de réalisation particulier de l'invention, le dispositif comprend des moyens d'informer un appareil au sein du système de contrôle domotique d'au moins une partie des commandes émises à destination de l'appareil de climatisation.

L'invention concerne également un système domotique intégrant un dispositif tel qu'indiqué précédemment.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig. 1 illustre l'architecture d'un système domotique selon un exemple de réalisation de l'invention.
La Fig. 2 illustre l'architecture matérielle d'un dispositif de commande de climatiseurs selon un exemple de réalisation de l'invention.

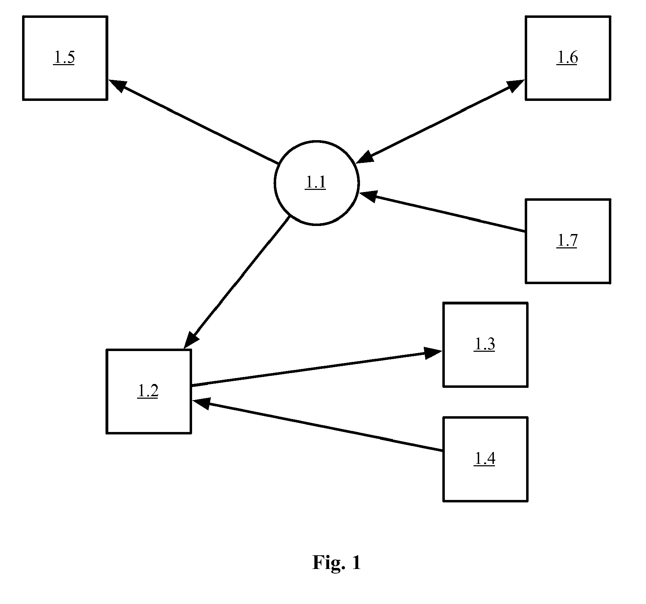

Un système domotique possède généralement l'architecture illustrée par la Fig. 1. Il s'agit la plupart du temps d'un système centralisé autour d'un dispositif maître appelé centrale représenté sur la figure par le dispositif 1.1. Cette centrale 1.1 communique avec un ensemble de dispositifs 1.2, 1.5, 1.6 et 1.7. Plusieurs catégories de dispositifs peuvent être ainsi connectées à la centrale 1.1. On trouve d'une part des capteurs comme le dispositif 1.7. Ces capteurs sont destinés à mesurer un ou plusieurs paramètres et à les communiquer à la centrale 1.1. On peut citer dans cette catégorie, des capteurs de température permettant au système de connaître la température intérieure de l'habitation, la température extérieure ou encore la température d'un ballon de stockage d'eau. On y trouve aussi un ensemble de détecteurs tels que les détecteurs d'intrusion, de mouvement ou autre. Ces détecteurs permettent d'informer le système de l'occurrence d'un événement comme la présence d'une personne, un début d'incendie ou l'ouverture d'une fenêtre. La communication entre un capteur tel que le capteur 1.7 et la centrale est généralement monodirectionnelle du capteur vers la centrale. Une autre catégorie de dispositif comprend des actionneurs représentés par le dispositif 1.5. Ces actionneurs permettent au système d'effectuer des actions sur des dispositifs présents dans l'habitation. On peut citer dans cette catégorie des moteurs de fermeture et d'ouverture de volets, des dispositifs permettant l'ouverture ou la fermeture de portes ou de fenêtres, l'allumage ou l'extinction de lumières. Ici encore, la communication entre l'actionneur et la centrale est généralement monodirectionnelle de la centrale vers l'actionneur. Enfin, certains dispositifs possèdent des fonctions de capteurs et d'actionneurs tels que le dispositif 1.6. C'est généralement le cas d'un dispositif de contrôle d'un système de chauffage par exemple. Un tel dispositif est pilotable par la centrale et peut également servir à mesurer et à remonter vers la centrale des paramètres de fonctionnement du système de chauffage.

Dans le cadre d'un tel système domotique, nous allons décrire plus précisément le pilotage par la centrale d'un appareil de climatisation. Cet appareil de climatisation est représenté par le dispositif 1.3 sur la Fig. 1. Ces appareils disposent généralement d'une télécommande 1.4 permettant de les piloter. La communication entre cette télécommande 1.4 et l'appareil de climatisation 1.3 s'effectue dans la plupart des cas grâce à un système d'émission d'ondes infrarouges. Le dispositif 1.2 est un dispositif de commande générique d'appareil de climatisation. Il est intégré au système domotique. Il peut donc communiquer avec la centrale 1.1 du système domotique. Le dispositif 1.2 comporte un émetteur infrarouge lui permettant d'émettre des commandes infrarouges à destination de l'appareil de climatisation 1.3. Pour pouvoir piloter l'appareil de climatisation 1.3, le dispositif de commande 1.2 doit pouvoir apprendre le jeu de commandes propre à l'appareil de climatisation 1.3. Pour ce faire, il dispose d'un récepteur infrarouge et de mémoire. Il est donc en mesure de recevoir et d'enregistrer les séquences infrarouges correspondant aux commandes propres de l'appareil de climatisation. Ces séquences seront émises par la télécommande 1.4 de l'appareil de climatisation.

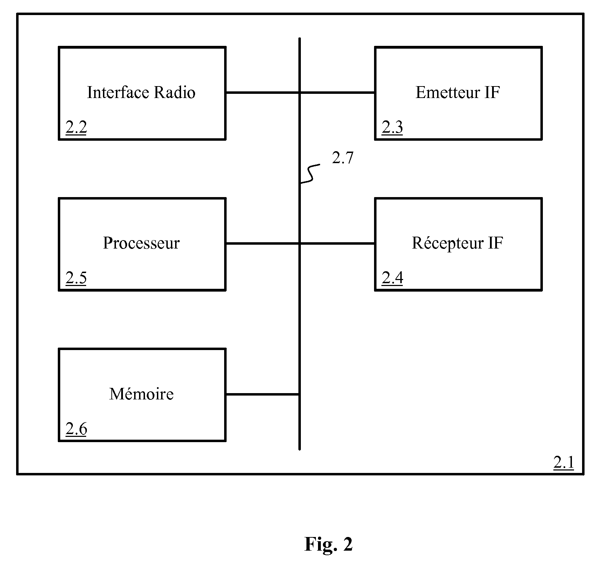

La Fig. 2 illustre l'architecture matérielle du dispositif de commande générique d'appareil de climatisation. Ce dispositif 2.1 comporte une interface avec le système domotique. Dans l'exemple de réalisation, cette interface est une interface radio 2.2 permettant au dispositif de communiquer avec la centrale du système domotique. Le dispositif de commande générique d'appareil de climatisation 2.1 comporte également un émetteur de signaux infrarouges 2.3. Cet émetteur lui permet d'émettre à destination d'un appareil de climatisation des séquences infrarouges correspondant à des commandes en vue du pilotage de l'appareil de climatisation. Le récepteur infrarouge 2.4 permet au dispositif de recevoir des séquences infrarouges, en particulier les séquences envoyées par la télécommande de l'appareil de climatisation. Le dispositif de commande générique 2.1 fonctionne sous le contrôle d'un processeur 2.5 chargé notamment de la gestion de l'interface radio 2.2 et de l'émetteur et du récepteur infrarouge. Ce processeur 2.5 utilise comme mémoire de travail, notamment pour le stockage des séquences infrarouges reçues par le récepteur infrarouge 2.4, la mémoire 2.6. Ces différents composants communiquent à l'aide d'un bus de communication 2.7.

Les différents appareils de climatisation acceptent des commandes similaires. Il est généralement possible de les mettre en marche, de les couper, leur fixer une température de consigne et éventuellement de piloter l'action d'un ventilateur permettant de brasser l'air et d'accélérer la mise en température d'une pièce. De ce fait, il est possible de définir un jeu de commandes universelles permettant le pilotage de ces appareils de climatisation. Ce jeu de commandes comprend une commande de mise en marche, une commande d'arrêt, une commande permettant de programmer une température de consigne qualifiée de température de confort et une autre commande permettant de programmer une température de consigne qualifiée d'économique. Les commandes peuvent également décliner la consigne de température, confort ou économique, avec une force de ventilation, par exemple faible, moyenne et forte. L'homme du métier comprendra que d'autres commandes peuvent être utilisées en plus ou à la place de celles-ci sans sortir du cadre de l'invention.

Ce jeu de commandes universelles est connu du système domotique et en particulier de la centrale du système. C'est grâce à ce jeu de commandes que le pilotage de l'appareil de climatisation peut être intégré aux politiques de gestion de température programmées dans le système domotique. Ce jeu de commandes universelles est également accessible à l'utilisateur via la commande manuelle du système domotique. L'utilisateur est donc à même de piloter son appareil de climatisation en utilisant sa commande du système domotique à l'aide d'une interface intégrée à celle servant au pilotage des autres appareils intégrés au système domotique.

Que les commandes soient issues d'une politique programmée au sein de la centrale ou de la commande manuelle du système domotique, elles sont envoyées via le réseau de communication du système domotique au dispositif de commande générique 2.1. Dans l'exemple de réalisation, ce réseau de communication est un réseau de communication par radio. Lorsque le dispositif de commande générique d'appareils de climatisation reçoit une telle commande faisant partie du jeu de commandes universelles, il l'interprète et cherche dans une table stockée dans la mémoire 2.6 la séquence infrarouge correspondant à cette commande. Il émet alors cette séquence grâce à l'émetteur infrarouge 2.3 à destination de l'appareil de climatisation.

Lors d'une phase de configuration du système, il faut donc mémoriser pour chaque commande du jeu de commandes universelles la séquence infrarouge correspondant à cette commande dans le jeu de commande propre à l'appareil de climatisation utilisé. Pour ce faire, l'utilisateur ou l'installateur du système place le dispositif de commande générique dans un mode d'apprentissage. Dans ce mode, le dispositif propose les différentes commandes du jeu de commandes universelles. Pour chaque commande du jeu de commandes universelles, l'utilisateur actionne la télécommande de l'appareil de climatisation avec la commande correspondante dans le jeu de commandes propre à l'appareil. La télécommande est actionnée à destination du dispositif de commande générique. Celui-ci reçoit alors grâce à son récepteur infrarouge 2.4 la séquence infrarouge correspondant à cette commande universelle. Il peut alors la stocker dans la table de correspondance présente dans la mémoire 2.6. Une fois que la séquence infrarouge, correspondant à chaque commande du jeu universel, est stockée dans la table de la mémoire 2.6, l'appareil de climatisation devient pilotable par le dispositif de commande générique.

Selon une variante de réalisation de l'invention, il est possible de ne pas enregistrer de séquences infrarouges pour certaines commandes universelles du jeu. Par exemple, aucune séquence ne sera enregistrée pour la consigne de température qualifiée de confort. Dans ce cas, seule la consigne qualifiée d'économique est opérationnelle. On peut ainsi réduire par configuration les commandes que l'on met à disposition de l'utilisateur du système. Il est possible, dans ce cas, que la commande manuelle du système domotique n'offre à l'utilisateur que les commandes universelles pour lesquelles une séquence infrarouge est enregistrée. Les autres commandes ne sont alors pas accessibles à l'utilisateur.

Dans le cas où l'appareil de climatisation doit être remplacé, il est possible de le faire par n'importe quel appareil même si son jeu de commandes propre est différent du jeu de commandes propre du premier appareil. Il suffit alors de recommencer une phase de configuration pour enregistrer les séquences infrarouges correspondant au nouveau jeu de commandes propre du nouvel appareil.

Selon une autre variante de réalisation de l'invention, la table de correspondance mémorisant les séquences infrarouges correspondant aux commandes universelles de l'appareil de climatisation est stockée dans un autre appareil du système domotique. Par exemple, elle peut être stockée au sein de la centrale du système domotique. Dans cette variante, il est facile de faire fonctionner un système intégrant plusieurs appareils de climatisation sans nécessiter de configurer chaque dispositif de commande générique. Une seule phase de configuration est alors nécessaire, tous les dispositifs de commande génériques intégrés au système pouvant alors utiliser la table de correspondance stockée de manière unique dans le système domotique. Selon cette variante, lorsqu'un dispositif de commande générique reçoit une commande universelle il envoie une requête à la centrale pour obtenir la séquence infrarouge correspondante avant de l'émettre à destination de l'appareil de climatisation. Il peut également stocker sa propre version de la table de correspondance quand il reçoit la séquence de manière à éviter de multiples requêtes pour la même séquence. Sa table locale est alors gérée sous la forme d'un cache vis-à-vis de la table de correspondance centrale.

Selon un mode particulier de réalisation de l'invention, le dispositif de commande générique informe un autre appareil du système domotique des commandes qu'il envoie a l'appareil de climatisation. Ceci n'est pas fait obligatoirement pour toutes les commandes, mais au moins pour certaines d'entre elles. Cette caractéristique permet d'informer, par exemple, la centrale du mode de fonctionnement du climatiseur. De ce fait, la centrale est capable d'utiliser cette information dans le pilotage d'autres dispositifs du système domotique. On évite par exemple que la centrale demande à certains appareils de produire de la chaleur alors que l'appareil de climatisation est programmé pour produire de la fraîcheur ou inversement.

## Revendications

1. Dispositif de commande d'appareils de climatisation comportant :
- des moyens d'émettre des commandes infrarouges à destination d'un appareil de climatisation ;
- des moyens de communication avec un système de contrôle domotique ;
**caractérisé en ce qu'**il comporte :
- des moyens d'interprétation d'un jeu universel de commandes de climatiseurs ;
- ledit dispositif de commande étant utilisé pour piloter un appareil de climatisation pilotable par infrarouge et disposant de son propre jeu de commandes, des moyens d'enregistrer, pour au moins une commande du jeu universel, une séquence infrarouge correspondant à cette commande dans le jeu de commandes propre à l'appareil de climatisation piloté ;
- des moyens d'émettre la séquence infrarouge enregistrée à destination de l'appareil de climatisation donné quand il reçoit la commande du jeu universel de commandes correspondante envoyée par le système de contrôle domotique.

2. Dispositif selon la revendication 1, **caractérisé en ce que** les séquences infrarouges correspondant aux commandes du jeu universel sont stockées dans une mémoire du dispositif.

3. Dispositif selon la revendication 1, **caractérisé en ce que** les séquences infrarouges correspondant aux commandes du jeu universel sont stockées dans un autre appareil du système domotique.

4. Dispositif selon la revendication 3, **caractérisé en ce qu'**il comporte en outre des moyens d'envoyer une requête au système domotique pour recevoir la séquence infrarouge correspondant à une commande universelle.

5. Dispositif selon la revendication 1, **caractérisé en ce qu'**il comprend des moyens de mémoriser des séquences infrarouges correspondant à un sous-ensemble du jeu de commandes universel.

6. Dispositif selon l'une des revendications 1 à 5, **caractérisé en ce qu'**il comprend des moyens d'informer un appareil au sein du système de contrôle domotique d'au moins une partie des commandes émises à destination de l'appareil de climatisation.

7. Système domotique intégrant un dispositif selon l'une des revendications 1 à 5.
